# EUROPÄISCHE PATENTSCHRIFT

(11) **EP 1 474 770 B1**
(45) Veröffentlichungstag und Bekanntmachung des Hinweises auf die Patenterteilung: **16.07.2008**
(21) Anmeldenummer: 03706310.4
(22) Anmeldetag: 12.02.2003
(51) Int. Cl.: G06K 7/08, G06K 19/067

(54) **ETIKETTENKENNSYSTEM UND DAFÜR GEEIGNETES CODIERVERFAHREN**
LABEL IDENTIFICATION SYSTEM AND CODING METHOD SUITED THEREFOR
SYSTEME D'IDENTIFICATION PAR ETIQUETTES ET PROCEDE DE CODAGE APPROPRIE

(30) Priorität: 14.02.2002 DE 10206137
(43) Veröffentlichungstag der Anmeldung: 10.11.2004
(73) Patentinhaber: Infineon Technologies AG, 81669 München (DE)
(72) Erfinder: BREDERLOW, Ralf, 81827 München (DE); PACHA, Christian, 81739 München (DE); THEWES, Roland, 82194 Gröbenzell (DE); WEBER, Werner, 80637 München (DE)
(74) Vertreter: Kottmann, Heinz Dieter
(86) Internationale Anmeldenummer: PCT/DE2003/000405
(87) Internationale Veröffentlichungsnummer: WO 2003/069539

(56) Entgegenhaltungen:
- US-A- 5 491 468

## Beschreibung

Die Erfindung betrifft ein Etiketten-Kennsystem mit einer ein magnetisches periodisches Wechselfeld durch eine Primärspule aussendenden Sender/Empfängereinheit und einem ein digitales Kenninformationswort bitweise speichernden Kennetikett, das, gespeist durch induktive Kopplung mit dem von der Sender/Empfängereinheit gesendeten magnetischen Wechselfeld, die gespeicherte Kenninformation durch entsprechende Modulation des Energieinhalts des Sendemagnetfelds verzögert ausgibt, ein dafür verwendbares Kennetikett sowie ein für ein derartiges Etiketten-Kennsystem verwendbares Codierverfahren.

Etikettenkennsysteme umfassen so verschiedenartige Anwendungen wie zum Beispiel die Kennung von Barcodes auf Preisschildern, Erkennung von Kenninformation in Aufklebern auf Koffern zur Gepäckverteilung an Flughäfen oder die Kennung von Kenninformation in Chipkarten, die zur Speicherung der Futtermenge in der Massentierhaltung eingesetzt werden. Die dabei verwendeten Kennetiketten werden im angelsächsischen Sprachgebrauch als ID-Tags bezeichnet. In den allermeisten Fällen werden die Kennetiketten drahtlos ausgelesen. Wichtige Kriterien für die Funktionalität eines Etikettenkennsystems ist die Reichweite und Positionsabhängigkeit des Sender/Empfängersystems. Dabei ist einerseits eine große Reichweite und andererseits eine kleine Positionsabhängigkeit des Systems wünschenswert. Zudem müssen die Kennetiketten in den meisten Fällen (zum Beispiel bei Großmärkten) extrem kostengünstig hergestellt werden. Des Weiteren ist es wünschenswert, die Information der Kennetiketten möglichst erst beim Endbenutzer aufzubringen, und diese Information letztendlich zuverlässig auszulesen.

Im Stand der Technik sind Etikettenkennsysteme mit großer Positionsflexibilität und Reichweite bekannt, die bis heute normalerweise als integrierte Siliziumschaltungen mit integriertem Flash-Speicher gefertigt werden. Derartige Siliziumschaltungen eignen sich aufgrund ihres relativ hohen Preises nur für eine kleine Klasse von Anwendungen, so dass heutzutage an der Supermarktkasse die auf einem Kennetikett zum Beispiel in Form eines Barcodes aufgebrachte Kenninformation mit Laserscannern erkannt, entinventarisiert und daraus der Preis ermittelt wird. Der dazu auf dem Etikett bzw. der Ware aufzubringende Barcode lässt sich zwar billig aufdrucken, was nur Bruchteile von Cents kostet, andererseits geschieht das Leseverfahren solcher Barcodes seriell und ist zu vernünftigen Preisen bislang nur mit menschlicher Hilfe möglich. Aus der US 5,491,468 ist ein fachübliches Etikettenkennsystem bekannt. Dementsprechend ist es wünschenswert, ein ohne menschliche Hilfe elektrisch funktionierendes Etikettenkennsystem mit billig herzustellenden Kennetiketten bereitzustellen. Eine zunehmende Anzahl von Etikettenkennsystemanwendungen möchte einerseits die Preisvorteile der Massenproduktion nutzen, die notwendige Voraussetzung dafür ist jedoch andererseits, dass die für die Kennetiketten benötigten integrierten Schaltkreise deutlich billiger produziert werden als heute. Diesen Anforderungen kann man nur zum Teil durch Produktivitätssteigerungen und kleinere Chipflächen entsprechen. Die integrierten Siliziumschaltungen mit der für viele dieser neuen Anwendungen notwendigen geringen Funktionalität wären jedoch nicht durch die skalierbare Schaltung sondern durch die schlecht skalierbaren Tags begrenzt. Um neue Massenmärkte für Etikettenkennsysteme zu erschließen, muss also auch der der IC-Herstellung zugrunde liegende Prozess vereinfacht werden.

Eine äußerst interessante Alternative, um die Herstellungskosten von integrierten Schaltungen drastisch zu senken besteht aus heutiger Sicht im Einsatz neuer extrem billiger Herstellungsverfahren wie zum Beispiel gedruckter Polymertransistoren. Im einfachsten Fall würden damit die Schaltkreise der heutigen integrierten Siliziumschaltungen einfach auf ein Polymertransistoren realisierendes Herstellungsverfahren übertragen. Dies führt jedoch zu einer ganzen Reihe neuer Probleme. So ist es wenigstens aus heutiger Sicht zum Beispiel nicht möglich, leistungsfähige n-MOS-Feldeffekttransistoren auf Polymerbasis herzustellen, wie sie für CMOS-Schaltungen benötigt werden. Es ist außerdem zu erwarten, dass die Leistungsaufnahme der Polymertransistorschaltungen aufgrund der wesentlich schlechteren Beweglichkeit der Ladungsträger in den Polymeren um ein Vielfaches höher ist als die der heutigen CMOS-Schaltungen. Nichtflüchtige Speicher in Polymertechnik stehen heutzutage ebenfalls nicht zur Verfügung.

Es ist demnach Aufgabe der Erfindung, ein Etikettenkennsystem bestehend aus einer Sender/Empfängereinheit und aus Kennetiketten einzuführen, das minimale Anforderungen an den Energieverbrauch und die Elektronik der Kennetiketten stellt, indem ein Großteil der Informationsverarbeitung auf die Sender/Empfängereinheit verlagert wird. Es ist außerdem Aufgabe der Erfindung, ein Codierverfahren anzugeben, mit dem die Information vom Endbenutzer auf dem Kennetikett leicht konfiguriert werden kann.

Diese Aufgaben werden anspruchsgemäß gelöst.

Gemäß einem ersten wesentlichen Aspekt ist ein erfindungsgemäßes Etikettenkennsystem dadurch gekennzeichnet, dass die Sender/Empfängereinheit mit der Primärspule verbundene Detektionsmittel zur Detektion des Energieinhalts des Sendemagnetfeldes und Decodiermittel aufweist, die die vom Kennetikett dem magnetischen Wechselfeld aufmodulierte Kenninformation aufgrund einer von den Detektionsmitteln jeweils detektierten Änderung des Energieinhalts des magnetischen Wechselfelds und der jeweils detektierten zeitlichen Verzögerung dieser Änderung decodiert und daraus die Kenninformation als binären Code ermittelt.

Um den Energieverbrauch zu senken, speichert das Kennetikett die dem ausgesendeten Wechselfeld entnommene Energie über maximal eine Periode des Wechselfeldes.

In dem Kennetikett entspricht jedes Bit der Kenninformation einem ganzzahligen Vielfachen einer von der Lage und vom Abstand des Kennetiketts von der Sender/Empfängereinheit abhängigen bekannten Basisenergiemenge. Dieses ganzzahlige Vielfache kann vorteilhafterweise jeweils das 2ⁱ-fache der Basisenergiemenge sein, wobei i die Bitstelle im Kenninformationswort angibt.

Diese Basisenergiemenge wird dadurch kalibriert, dass ein ebenfalls positionsabhängiges Referenzsignal vom Kennetikett ausgesendet wird, wobei dieses Referenzsignal die Menge der der Kenninformation entsprechenden zwischengespeicherten Energie des Kennetiketts quantifiziert. Die Kalibrierung erfolgt dabei in der Sender/Empfängereinheit.

In der einfachsten Form ist das von der Sender/Empfängereinheit ausgesendete magnetische Wechselfeld sinusförmig, wobei in diesem Fall die Kenninformation vom Kennetikett auf die eine Halbwelle und das Referenzsignal auf die benachbarte andere Halbwelle der Sinusschwingung aufmoduliert werden.

Das für ein derartiges Etikettenkennsystem vorteilhafterweise verwendbares Kennetikett weist außer der mit dem von der Sender/Empfängereinheit ausgesendeten magnetischen Wechselfeld induktiv koppelbaren Sekundärspule eine elektrische Speichereinheit zur bitweisen Speicherung der Kenninformation als Binärcode und Schaltungsmittel zur Verbindung der Sekundärspule mit der Speichereinheit auf. Die Speichereinheit im Kennetikett speichert die der Sekundärspule entnommene Energie nur während einer Halbwelle des Wechselfelds zwischen und die der im Kennetikett bzw. der Speichereinheit gespeicherten Kenninformation entsprechende Energie wird während der anderen Halbwelle des Wechselfeldes wieder übertragen.

Die Speichereinheit des Kennetiketts weist n mit Source und/oder Drain parallel geschaltete Speichertransistoren zur Speicherung eines n-stelligen binären Kenninformationsworts auf. Jeder Speichertransistor entspricht also einem Bit des Kenninformationsworts. Zusätzlich weist die Speichereinheit einen weiteren Speichertransistor zur Speicherung des Referenzsignals auf.

In dieser Speichereinheit wird vorteilhafterweise die Bitstelle des Kenninformationsworts durch die entsprechende Weite eines jeweiligen Speichertransistors und der logische Zustand jeder Bitstelle durch die Kontaktierung des jeweiligen Speichertransistors festgelegt. Wenn, wie bevorzugt, die die Kenninformation speichernden Transistoren als Polymertransistoren realisiert sind, können die die Kontaktierung bestimmenden Leiterbahnen der Speichertransistoren im Offsetdruck und auch zu einem späteren Zeitpunkt als der Rest des Kennetiketts hergestellt werden.

Gemäß einem anderen wesentlichen Aspekt ermöglicht die Erfindung ein Codierverfahren für eine in einem Etikettenkennsystem durch induktive Kopplung eines von einer Primärspule einer Sender/Empfängereinheit ausgesendeten periodischen magnetischen Wechselfelds mittels einer mit einem Kennetikett verbundenen Sekundärspule in Form eines Binärworts vom Kennetikett zu übertragenden Kenninformation, wobei diese Kenninformation im Kennetikett gespeichert und durch eine entsprechende Modulation des Energieinhaltes des Sendemagnetfeldes verzögert ausgegeben wird.

Vorteilhafterweise ist dieses Codierverfahren dadurch gekennzeichnet, dass jedes Bit der Kenninformation so codiert wird, dass es dem 2ⁱ-fachen einer von der Lage und vom Abstand des Kennetiketts von der Sender/Empfängereinheit abhängenden bekannten Basisenergiemenge entspricht.

Bevorzugt ist das Codierverfahren weiterhin dadurch gekennzeichnet, dass im Falle eines sinusförmigen magnetischen Wechselfelds die Basisenergiemenge durch ein ebenfalls positionsabhängiges vom Kennetikett während einer Halbwelle ausgesendetes Referenzsignal in der Sender/Empfängereinheit kalibriert wird, welches durch die Menge der der Kenninformation entsprechenden und im Kennetikett während der benachbarten Halbwelle zwischengespeicherten Energie quantifiziert ist.

Nachstehend wird ein Ausführungsbeispiel eines erfindungsgemäßen Etikettenkennsystems, ein Ausführungsbeispiel eines für dieses Etikettenkennsystem geeigneten Kennetiketts sowie das erfindungsgemäße Codierverfahren bezogen auf die beiliegende Zeichnung erläutert.

Die Zeichnungsfiguren zeigen im Einzelnen:
- Fig. 1: schematisch Funktionsblöcke eines erfindungsgemäßen Etikettenkennsystems;
- Fig. 2: ein Diagramm, das die Decodierung der Kenninformation in der Sender/Empfängereinheit des erfindungsgemäßen Etikettenkennsystems erläutert;
- Fig. 3: ein Ausführungsbeispiel einer Schaltung für ein bei der Erfindung verwendbares Kennetikett und
- Fig. 4: ein Diagramm eines Simulationsergebnisses, das die Leistung über der Zeit für verschiedene Bitkombinationen im Speicher des Kennetiketts veranschaulicht.

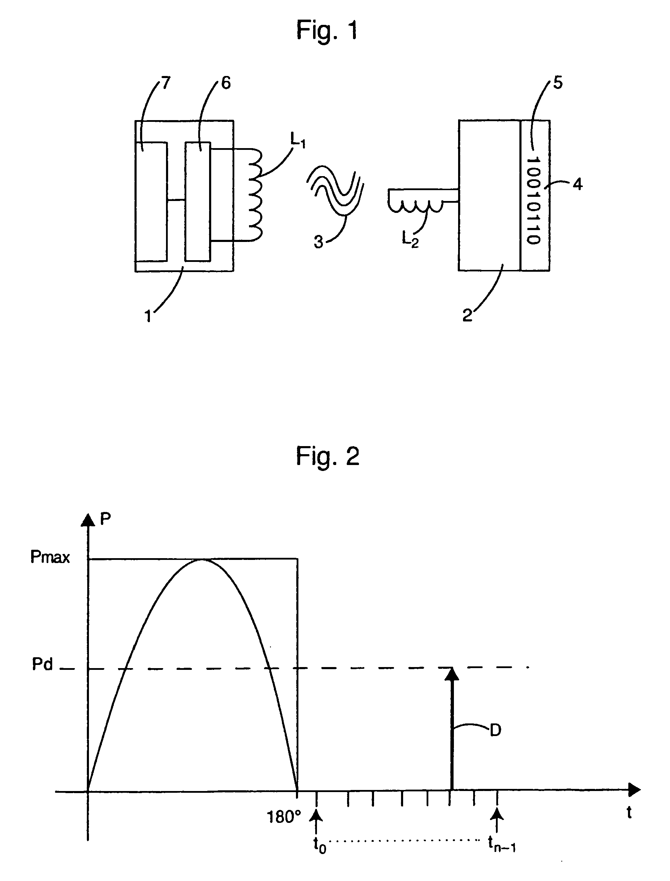

Gemäß dem in Fig. 1 schematisch dargestellten Funktionsblockschaltbild sendet eine Sende/Empfängereinheit 1 durch eine Primärspule L1 ein magnetisches Wechselfeld 3 aus. Ein Kennetikett 2 weist eine Sekundärspule L2 auf, die mit dem Wechselfeld 3 induktiv gekoppelt ist. In einer Speichereinheit 4 des Kennetiketts 2 ist ein binäres Kenninformationswort 5 gespeichert, das in dem dargestellten Beispiel acht Bitstellen hat.

Die Sender/Empfängereinheit 1 weist außerdem mit der Primärspule L1 verbundene Detektionsmittel 6 zur Detektion des Energieinhalts des Sendemagnetfelds 3 und Decodiermittel 7 auf, die die von dem Kennetikett 2 übertragene Kenninformation aufgrund einer entsprechenden jeweils detektierten Änderung des Energieinhalts des Magnetfelds und einer jeweils detektierten zeitlichen Verzögerung dieser Änderung decodiert und daraus die Kenninformation als binären Code ermittelt.

Eine wichtige Randbedingung für die drahtlose Übertragung von Daten ist das Protokoll, das heißt die Art und Weise wie die Daten vor der Übertragung codiert und später wieder decodiert werden. Da es sich bei dem vorliegenden Etikettenkennsystem um ein Produkt mit geringstmöglichen Herstellungskosten handeln soll, soll der Aufwand der Decodierung auf die Sender/Empfängereinheit konzentriert werden, die in wesentlich geringeren Stückzahlen als die Kennetiketten benötigt wird. Auf der Sender/Empfängerseite wird gemäß obiger Beschreibung durch eine Primärspule L1 ein magnetisches Wechselfeld bei einer von der Post zugelassenen Frequenz, zum Beispiel 125 kHz, ausgesendet. Die Detektionsmittel 6 der Sender/Empfängereinheit 1 detektieren gleichzeitig den Energieinhalt des Magnetfelds zum Beispiel über den für eine konstante Sendespannung benötigten Strom.

Das Kennetikett 2 moduliert diesen Energieinhalt durch Umwandlung von magnetischer in elektrostatische Energie und zurück in magnetische Energie zu einem späteren Zeitpunkt. Die einzelnen Bitstellen werden durch die Menge der vom Kennetikett dem Magnetfeld entnommenen magnetischen Energie und durch die zeitliche Verzögerung der Rückumwandlung dieser Energie in magnetische Energie codiert. Jedes im Kennetikett gesetzte Bit i entspricht einem Vielfachen, zum Beispiel 2ⁱ, einer Basisenergiemenge, die jedoch von der Lage und dem Abstand des Kennetiketts vom Sender abhängt. Wenn man die Gesamtenergie auf die einem Bit entsprechende Basisenergiemenge bezieht, ergibt sich aus dem gesamten Energieinhalt eine charakteristische Zahl. Die Zahl lässt sich direkt in einen Binärcode umrechnen, der wiederum den Werten der einzelnen Speicherbits im Kennetikett entspricht. Die erwähnte Basisenergiemenge muss jedoch unter den genannten Randbedingungen bekannt sein.

Da ein genauer Abstand und eine definierte Lage der Sekundärspule L2 zur Primärspule L1 nicht gewährleistet werden kann, benötigt man ein Referenzsignal, welches ebenso wie der Speicherinhalt positionsabhängig ist und mit dem die Menge der im Kennetikett zwischengespeicherten Energie quantifiziert werden kann. Dieses Referenzsignal kann nun auf die positive oder negative Halbwelle des magnetischen Wechselfelds 3 moduliert werden, während der Speicherinhalt auf die benachbarte negative oder positive Halbwelle derselben Schwingung des Wechselfelds codiert wird. Allerdings ist alternativ auch eine andere Phasenaufteilung der Signale denkbar. Auf diese Weise wird das Codierungsverfahren unabhängig von Abstand und Lage des Spulenpaars L1, L2. Erfolgt die zweimalige Umwandlung der Sendeenergie, d.h. der magnetischen Energie in elektrische Energie und der elektrischen Energie in magnetische Energie innerhalb einer Periode, d.h. während einer Schwingungsdauer des magnetischen Wechselfeldes 3, so ist es außerdem möglich, dass die Bitsignale durch eine einfache und energieeffiziente Schaltungsanordnung auf dem Kennetikett erzeugt werden.

In Fig. 2, die die Leistung P des magnetischen Wechselfelds abhängig von der Zeit t darstellt und das in der Sender/Empfängereinheit ausgeführte Decodierverfahren schematisch veranschaulicht, ist links die erste Halbwelle eines periodischen, zum Beispiel sinusförmigen Wechselsignals mit der maximalen Leistung Pₘₐₓ und rechts auf der Zeitachse innerhalb einer (nicht gezeigten) zweiten Halbwelle ein Detektionssignal D mit einem einer Leistung P_{d} entsprechenden Energieinhalt dargestellt, welches gemäß einer von n Verzögerungszeiten t₀, ..., tₙ₋₁ detektiert wird. Wie erwähnt decodieren die Decodiermittel 7 in der Sender/Empfängereinheit 1 die Kenninformation anhand des durch P_{d} angegebenen Energieinhalts des Detektionssignals D und des der jeweiligen Verzögerungszeit entsprechenden Zeitschlitzes in dem dieses Signal D auftritt, und erzeugen die decodierte Information in Form eines Binärcodes.

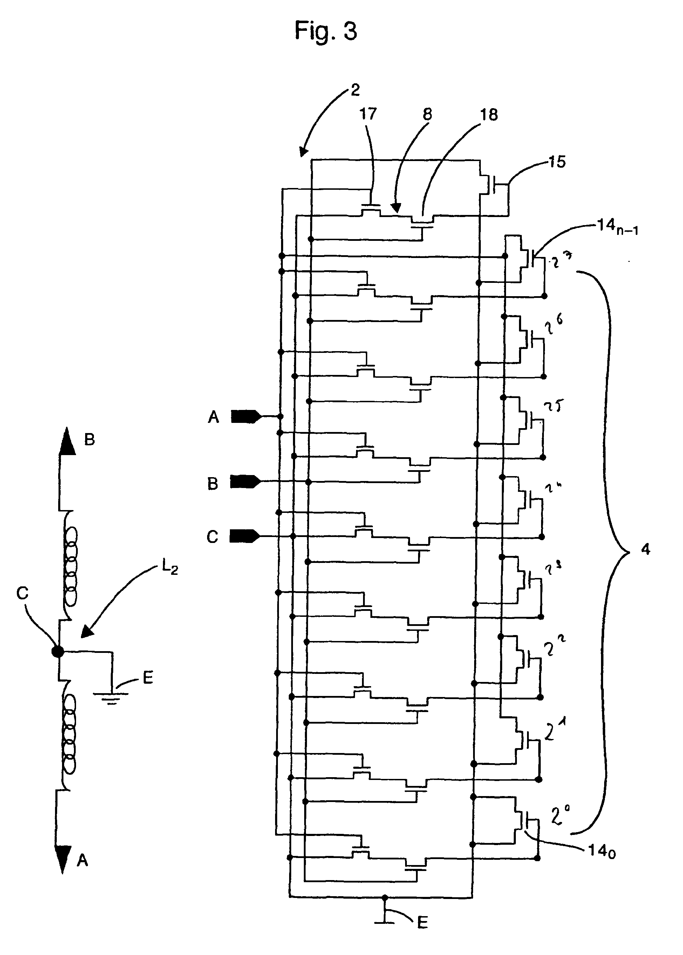

Nachstehend wird anhand der Fig. 3 Aufbau und Funktion einer bevorzugten Schaltungsanordnung in einem Kennetikett gemäß der Erfindung beschrieben. Es ist anzustreben, dass die Schaltung nur Energie für die Übertragung von Speicherinhalt nicht jedoch für periphere Schaltungsfunktionen benötigt. Da dem Kennetikett in dem drahtlos arbeitenden Etikettenkennsystem nur über die Sekundärspule L2 vom magnetischen Wechselfeld 3 Energie zugeführt werden kann, liegt diese Energie im Kennetikett primär auch als Wechselspannung bzw. Wechselstrom vor. Klassische Schaltungstechnik funktioniert jedoch mit Gleichspannungen oder Strömen. Das erfindungsgemäß vorgeschlagene Codierungsverfahren vermeidet die verlustbehaftete Gleichrichtung der Primärenergie. Die Energie der einzelnen Halbwellen wird von der Schaltung zwischengespeichert und entsprechend dem im Kennetikett enthaltenen Kenninformationswort verändert wieder übertragen. Wenn das von der Sekundärspule L2 erzeugte Strom- bzw. Spannungssignal direkt als Takt-, Steuer- und Eingangssignal genutzt wird, ist es nicht einmal nötig, konstante Versorgungsspannungen an die Transistoren anzulegen.

Die Übertragung des Kenninformationsworts vom Kennetikett zur Sender/Empfängereinheit erfolgt über die Modulation des elektrischen Widerstands zwischen den Enden A und B der Sekundärspule L2 und dem mit Erde E verbundenen Mittelabgriff derselben. Diese Modulation führt zu einer variablen Gegeninduktion in der Primärspule L1 (in Fig. 3 nicht dargestellt) und damit zu einem entsprechend modulierten Strom in derselben. Diese Modulation wird nun über eine Strommessung im Primärkreis der Sender/Empfängereinheit detektiert. Damit wird die Modulation des Widerstandes der Sekundärspule L2 zum Sender durch die erfolgte Gegeninduktion übertragen.

Der rechte Teil der Fig. 3 stellt eine einfache Schaltungsanordnung zur Modulation des Widerstandes in der Sekundärspule L2 dar, die mit ihren beiden äußeren Enden A und B an den Anschlüssen A und B der Schaltungsanordnung angeschlossen ist.

Die Schaltungsanordnung der Fig. 3 kommt mit einem einzigen Typ von MOS-Transistoren aus, zum Beispiel mit Polymertransistoren vom p-Typ. Die oben erwähnten Randbedingungen sind bei der in Fig. 3 gezeigten Schaltungsanordnung erfüllt: die Widerstandsänderung bzw. der Stromverbrauch werden fast ausschließlich von den Speichertransistoren 14₀ - 14ₙ₋₁ und dem Referenztransistor 15 der Speichereinheit 4 bestimmt. Die in Fig. 3 gezeigte Schaltungsanordnung lässt sich zum besseren Verständnis in drei Teile aufteilen. Der erste linksseitige mit der Bezugszahl 8 bezeichnete Teil ist eine Ansteuerungsschaltung. Sie besteht für jedes Speicherbit des Kenninformationsspeichers 4 und für den Referenztransistor 15 aus je zwei Transistoren 17, 18. Die Sourceanschlüsse der ersten Transistoren 17 sind gemeinsam mit dem Mittelabgriff C und die Gateanschlüsse derselben sind gemeinsam mit dem unteren Ende A der Sekundärspule L2 verbunden. Der Drainanschluss jedes der ersten Transistoren 17 ist jeweils mit dem Sourceanschluss eines der zweiten Transistoren 18 verbunden. Deren Gateanschlüsse sind gemeinsam mit dem oberen Ende B der Sekundärspule L2 verbunden, während die Drainanschlüsse jedes zweiten Transistors 18 jeweils mit dem Gateanschluss eines jeweiligen Speichertransistors 14₀ - 14ₙ₋₁ bzw. Referenztransistors 15 verbunden sind. Da die beiden äußeren Enden A und B der Sekundärspule L2 im Spannungssignal um 180° phasenverschoben sind, ist immer einer der beiden Ansteuerungstransistoren 17, 18 unterhalb der Schwellspannung und damit im Sperrbereich. Ein Stromfluss zwischen dem Mittelabgriff der Sekundärspule L2 und dem Gate des Speichertransistors ist nur über Verschiebungsströme möglich. Solche Verschiebungsströme entstehen jedoch durch die von der Sekundärspule L2 anliegenden Wechselspannungen an den Gateelektroden der beiden Ansteuertransistoren 17 und 18. Sie führen letztendlich zu Ladungsverschiebungen auf den Gates der Speichertransistoren 14₀ - 14ₙ₋₁, so dass dort abwechselnd positive und negative Gatespannungen zwischen Source und Gate anliegen. Dies verursacht einen Wechsel zwischen hoher und niedriger Leitfähigkeit auf den Speichertransistoren und einem Referenztransistor 15. Sind nun die Drains (Sources) der Speichertransistoren 14₀ - 14ₙ₋₁ gemeinsam mit dem oberen (alternativ dem unteren) äußeren Spulenanschluss B (A) und der Referenztransistor 15 mit dem jeweils anderen äußeren Spulenanschluss A (B) verbunden, so bestimmen die Speichertransistoren 14₀ - 14ₙ₋₁ für die eine und der Referenztransistor 15 für die andere Halbwelle des magnetischen Wechselfeldes die Leitfähigkeit der an der Sekundärspule L2 angeschlossenen Gesamtschaltung.

Die Codierung eines jeweiligen Speichertransistors i ergibt sich durch dessen Weite 2ⁱ, das heißt durch die unterschiedlichen Weiten der Transistoren wird die Größe der Widerstandsänderung und damit die Stelle des Bits im digitalen Kenninformationswort bestimmt. Der logische Zustand lässt sich durch die Kontaktierung der Speichertransistoren 14₀ - 14ₙ₋₁ festlegen (Anschluss des Drains an Masse bedeutet "0"; Anschluss des Drains an den oberen (bzw. unteren) äußeren Spulenanschluss A, B bedeutet "1"). Der Referenztransistor 15 sollte möglichst die Weite eines mittleren Bits der Speichertransistoren aufweisen, und sein Drainanschluss muss am unteren (bzw. oberen) äußeren Spulenanschluss A (bzw. B) der Sekundärspule L2 angeschlossen sein.

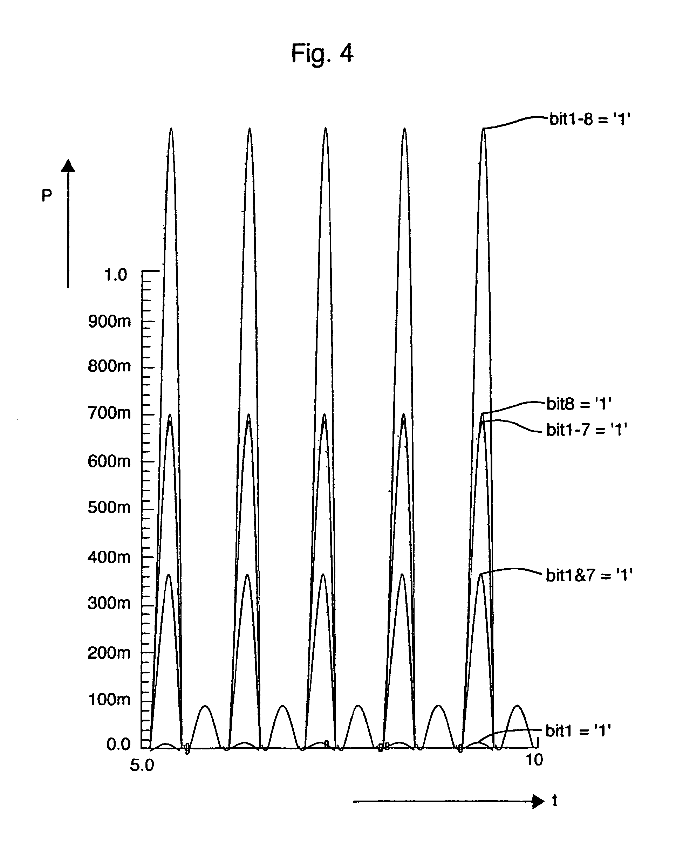

Fig. 4 zeigt ein Diagramm einer Simulation des resultierenden Leistungsverbrauchs der in Fig. 3 dargestellten Schaltung für unterschiedliche Bitkombinationen bzw. digitale Worte. Fig. 4 zeigt auch, dass die Schaltungsanordnung der Fig. 3 hinsichtlich der Unterscheidbarkeit des Bits 8 = "1" und der Bits 1 bis 7 gleich "1" noch nicht optimal ist, da die Leistungswerte dieser Bitkombinationen sehr nahe beieinander liegen. Der nicht näher bezeichnete Leistungsverbrauch der zweiten Halbwelle gibt das vom Referenztransistor 15 erzeugte Referenzsignal an.

Zur Herstellung eines Kennetiketts mit der in Fig. 3 gezeigten Schaltungsanordnung ist es notwendig, die Information, die das Etikett enthalten soll, darauf zu codieren. Um diese Codierung so kostengünstig wie möglich zu machen, ist es vorteilhaft, das Kennetikett so weit wie möglich bis zu dem die Information bestimmenden Schritt in billiger Massenproduktion vorzufertigen. Bei der in Fig. 3 gezeigten Schaltungsanordnung ist nur die Drainverbindungsleitung der Speichertransistoren 14₀ - 14ₙ₋₁ für den Inhalt eines Bits, das heißt logisch "0" oder logisch "1" verantwortlich, während die restliche Schaltung vom Speicherinhalt unabhängig ist. Es genügt also, wenn nur die Anschlüsse der den Kenninformationsspeicher 4 bildenden Transistoren 14₀ - 14ₙ₋₁ durch den Endanwender entsprechend des Speicherinhalts auf die dem logischen Zustand "0" oder "1" entsprechenden Leitungen gelegt werden. Dies wird vorteilhafterweise durch billigen und einfachen Offsetdruck dieser Leiterbahnen geschehen. Voraussetzung ist jedoch, dass der Herstellungsprozess der Schaltung (bevorzugt in Polymertechnik) es ermöglicht, eine Leitung mit einem solchen oder ähnlichen Druckverfahren auf die vorgefertigte Schaltung aufzubringen.

Bei dem erfindungsgemäßen Etikettenkennsystem wird vorteilhafterweise die Information eines Kennetiketts über den Leistungsverbrauch der Primärspule 1 im magnetischen Wechselfeld des Sendesignals decodiert. Weiterhin werden vorteilhafterweise die Signale über die Amplitude, Phase oder Form einer Halbwelle des Sendesignals codiert. Die Kalibrierung der ortsabhängigen Signale, so dass diese ortsunabhängig decodiert werden können, geschieht durch ein Referenzsignal auf der anderen Halbwelle des Sendesignals.

Vorteilhafterweise wird die Schaltung, die auf dem Kennetikett zur Speicherung der Kenninformation und zur Ansteuerung notwendig ist, in sehr kostengünstiger Polymertechnik vorgefertigt und die den Informationsinhalt des Kennetiketts bestimmenden Leiterbahnen im Offsetdruckverfahren nach der Schaltungsimplementierung aufgebracht.

### Bezugszeichenliste

- 1: Sender/Empfängereinheit
- 2: Kennetikett
- 3: magnetisches Wechselfeld
- 4: Kenninformationsspeicher
- 5: Kenninformation
- 6: Detektionsmittel
- 7: Decodiermittel
- L1: Primärspule
- L2: Sekundärspule
- 8: Ansteuerungsschaltung
- 14₀ ... 14ₙ₋₁: Speichertransistoren
- 15: Referenztransistoren
- 17, 18: Transistoren der Ansteuerschaltung 8
- A, B: äußere Spulenanschlüsse der Sekundärspule L2
- C: mittlerer Spulenabgriff der Sekundärspule L2
- E: Masse
- P, Pₘₐₓ, P_{d}: Leistungswerte
- D: Detektionssignal
- t, to, tₙ₋₁: Zeiten

## Patentansprüche

1. Kennetikett für Etiketten-Kennsystem, wobei das Kennetikett aufweist:
- eine Sekundärspule (L2), die in ein von einer Sender/Empfängereinheit (1) des Etiketten-Kennsystems ausgesendetes periodisches magnetisches Wechselfeld (3) bringbar und **dadurch** induktiv mit diesem koppelbar ist,
- eine elektrische Speichereinheit (4) zur bitweisen Speicherung von Kenninformation (5) als Binärcode und
- Schaltungsmittel, die die Sekundärspule (L2) mit der Speichereinheit (4) verbinden,
**dadurch gekennzeichnet daß** in der Speichereinheit (4) die der Sekundärspule (L1) entnommene Energie nur während einer Halbwelle des Wechselfeldes (3) zwischenspeicherbar und die der darin gespeicherten Kenninformation entsprechende Energie über die Schaltungsmittel und die Sekundärspule (L2) während der anderen Halbwelle des Wechselfeldes wieder zum Etiketten-Kennsystem übertragbar ist, wobei
- jedes Bit (i) der Kenninformation so codiert ist, dass es einem ganzzahligen Vielfachen (2ⁱ) einer von der Lage und vom Abstand des Kennetiketts (2) von der Sender/Empfängereinheit (1) abhängenden bekannten Basisenergiemenge entspricht.

2. Kennetikett nach Anspruch 1,
**dadurch gekennzeichnet, dass**
die Speichereinheit (4) n mit ihren Source- und/oder Drainanschlüssen parallel geschaltete Speichertransistoren (14₀ - 14ₙ₋₁) aufweist, die jeweils einem Bit (i) des n-stelligen binären Kenninformationsworts (5) entsprechen.

3. Kennetikett nach Anspruch 2,
**dadurch gekennzeichnet, dass**
die Speichereinheit (4) einen zusätzlichen parallel zu den anderen Speichertransistoren geschalteten Speichertransistor (15) zur Speicherung eines Referenzsignals aufweist.

4. Kennetikett nach einem der Ansprüche 1 bis 3,
**dadurch gekennzeichnet, dass**
die Stelle des jeweiligen Bits (i) des Kenninformationsworts durch die entsprechende Weite eines jeden Speichertransistors (14₀ - 14ₙ₋₁) festgelegt ist.

5. Kennetikett nach einem der Ansprüche 1 bis 4,
**dadurch gekennzeichnet, dass**
der logische Zustand ("0" oder "1") jedes Bits eines Kenninformationsworts durch die Kontaktierung des Source- und/oder Drainanschlusses des jeweiligen Speichertransistors (14₀ - 14ₙ₋₁) festgelegt ist.

6. Kennetikett nach Anspruch 2 oder 3,
**dadurch gekennzeichnet, dass**
die Transistoren des Kennetiketts (2) Polymertransistoren sind.

7. Kennetikett nach Anspruch 6,
**dadurch gekennzeichnet, dass**
die Kontaktierung bestimmende Leiterbahnen jedes Speichertransistors durch Offsetdruck hergestellt sind.

8. Etiketten-Kennsystem für das Kennetikett nach einem der Ansprüche 1 bis 7, umfassend:
- eine das periodische magnetische Wechselfeld aussendende Primärspule (L1) in der Sender/Empfängereinheit (1),
- in der Sender/Empfängereinheit (1) mit der Primärspule (L1) verbundene Detektionsmittel (6) zur Detektion der während der anderen Halbwelle des magnetischen Wechselfeldes (3) rückübertragenen, mit der Kenninformation modulierten Energie und Decodiermittel (7) für diese, wobei
- die vom Kennetikett (2) dem magnetischen Wechselfeld (3) durch Umwandlung von magnetischer in elektrostatische Energie und zu einem späteren Zeitpunkt zurück in magnetische Energie aufmodulierte Kenninformation aufgrund der detektierten Änderung des Energieinhalts des magnetischen Wechselfelds (3) durch Feststellen des für eine konstante Sendespannung benötigten Stroms von den Detektionsmitteln (6) decodierbar ist, um daraus mit den Decodiermitteln (7) die Kenninformation als binären Code zu ermitteln, und
- jedes Bit (i) der Kenninformation so codiert ist, dass es einem ganzzahligen Vielfachen (2ⁱ) einer von der Lage und vom Abstand des Kennetiketts (2) von der Sender/Empfängereinheit (1) abhängenden bekannten Basisenergiemenge entspricht.

9. Etiketten-Kennsystem nach Anspruch 8,
**dadurch gekennzeichnet, dass** das Vielfache jeweils das 2ⁱ-fache der Basisenergiemenge ist.

10. Etiketten-Kennsystem nach Anspruch 8 oder 9,
**dadurch gekennzeichnet, dass** die Basisenergiemenge durch ein ebenfalls positionsabhängiges und von dem Kennetikett (2) ausgesendetes Referenzsignal, welches die Menge der der Kenninformation entsprechenden zwischengespeicherten Energie des Kennetiketts (2) quantifiziert, in der Sender/Empfängereinheit (1) kalibrierbar ist.

11. Etiketten-Kennsystem nach einem der Ansprüche 8 bis 10,
**dadurch gekennzeichnet, dass** das von der Sender/Empfängereinheit (1) ausgesendete magnetische Wechselfeld (3) sinusförmig ist und dass der das Kenninformationswort des Kennetiketts (2) angebende Speicherinhalt des Speichers auf die eine Halbwelle und das Referenzsignal auf die benachbarte andere Halbwelle der Sinusschwingung aufmodulierbar sind.

12. Codierverfahren für eine in einem Etiketten-Kennsystem durch induktive Kopplung eines von einer Primärspule (L1) einer Sender/Empfängereinheit (1) ausgesendeten periodischen magnetischen Wechselfeldes (3) mit einer mit einem Kennetikett (2) verbundenen Sekundärspule (L2) in Form einer als Binärwort vom Kennetikett zu übertragenden Kenninformation, bei dem
- die Kenninformation (5) im Kennetikett als Binärwort nur während einer Halbwelle des Wechselfeldes (3) zwischengespeichert und die der darin gespeicherten Kenninformation entsprechende Energie während der anderen Halbwelle des Wechselfeldes zeitlich verzögert wieder zum Etiketten-Kennsystem übertragen wird, und
- jedes Bit (i) der Kenninformation so codiert wird, dass es einem ganzzahligem Vielfachen (2ⁱ) einer von der Lage und vom Abstand des Kennetiketts (2) von der Sender/Empfängereinheit (1) abhängenden bekannten Basisenergiemenge entspricht.

13. Codierverfahren nach Anspruch 12,
**dadurch gekennzeichnet, dass** im Falle eines sinusförmigen magnetischen Wechselfelds (3) die Basisenergiemenge durch ein ebenfalls positionsabhängiges vom Kennetikett (2) während einer Halbwelle ausgesendetes Referenzsignal in der Sender/Empfängereinheit (1) kalibriert wird, welches durch die Menge der der Kenninformation entsprechenden und im Kennetikett (2) während der benachbarten Halbwelle zwischengespeicherten Energie quantifiziert ist.

## Claims

1. Identification label for a label identification system, the identification label having:
- a secondary coil (L2), which can be brought into a periodically alternating magnetic field (3) emitted by the transmitting-receiving unit (1) of the label identification system and can thereby be inductively coupled with said field,
- an electrical memory unit (4) for the storing of identification information (5) on a bit basis as binary code and
- switching means connecting the secondary coil (L2) to the memory unit (4), **characterized in that** the memory unit (4) can buffer-store the energy taken from the secondary coil (L1) only during one half-wave of the alternating field (3), and can transmit the energy corresponding to the identification information stored therein to the label identification system again during the other half-wave of the alternating field by means of the switching means and the secondary coil (L2), wherein
- each bit (i) of the identification information is coded in such a way that it corresponds to an integral multiple (2ⁱ) of a known base energy amount dependent on the position and the distance of the identification label (2) from the transmitting-receiving unit (1).

2. Identification label according to Claim 1, **characterized in that** the memory unit (4) has n storage transistors (14₀ - 14ₙ₋₁), connected with their source and/or drain terminals in parallel, which respectively correspond to one bit (i) of the n-place binary identification information word (5).

3. Identification label according to Claim 2, **characterized in that** the memory unit (4) has an additional storage transistor (15), connected in parallel with the other storage transistors, for storing the reference signal.

4. Identification label according to one of Claims 1 to 3, **characterized in that** the location of the respective bit (i) of the identification information word is fixed by the corresponding width of each and every storage transistor (14₀ - 14ₙ₋₁).

5. Identification label according to one of Claims 1 to 4, **characterized in that** the logic state ("0" or "1") of each bit of the identification information word is fixed by the contacting of the source and/or drain terminal of the respective storage transistor (14₀ - 14ₙ₋₁).

6. Identification label according to Claim 2 or 3, **characterized in that** the transistors of the identification label (2) are polymer transistors.

7. Identification label according to Claim 6, **characterized in that** the conductor tracks of each storage transistor that determine the contacting are produced by offset printing.

8. Label identification system for the identification label according to one of Claims 1 to 7, comprising:
- a primary coil (L1), emitting the periodically alternating magnetic field, in the transmitting-receiving unit (1),
- detection means (6), connected to the primary coil (L1) in the transmitting-receiving unit (1), for detecting the energy transmitted back during the other half-wave of the alternating magnetic field (3) and modulated with the identification information, and decoding means (7) for this, wherein
- the identification information that is modulated onto the alternating magnetic field (3) from the identification label (2) can be decoded by the decoding means (6) by conversion from magnetic energy into electrostatic energy and at a later point in time back into magnetic energy on the basis of the detected change in the energy content of the alternating magnetic field (3) by establishing the current required for a constant transmission voltage, in order to determine the identification information from this as a binary code with the decoding means (7), and
- each bit (i) of the identification information is coded in such a way that it corresponds to an integral multiple (2ⁱ) of a known base energy amount dependent on the position and the distance of the identification label (2) from the transmitting-receiving unit (1).

9. Label identification system according to Claim 8, **characterized in that** the multiple is in each case 2ⁱ times the base energy amount.

10. Label identification system according to Claim 8 or 9, **characterized in that** the base energy amount can be calibrated in the transmitting-receiving unit (1) by a likewise position-dependent reference signal which is emitted from the identification label (2) and quantifies the amount of the buffer-stored energy of the identification label (2) corresponding to the identification information.

11. Label identification system according to one of claims 8 to 10, **characterized in that** the alternating magnetic field (3) emitted by the transmitting-receiving unit (1) is sinusoidal and **in that** the memory content of the memory specifying the identification information word of the identification label (2) is modulated onto one half-wave and the reference signal can be modulated onto the neighbouring other half-wave of the sinusoidal oscillation.

12. Coding method for an item of identification information to be transmitted in a label identification system from an identification label in the form of a binary word by inductive coupling of a periodically alternating magnetic field (3) emitted by a primary coil (L1) of a transmitting-receiving unit (1) with a secondary coil (L2) connected to the identification label (2), in which
- the identification information (5) is buffer stored only during the half-wave of the alternating field (3) in the form of a binary word in the identification label and the energy corresponding to the identification information stored therein is transmitted with a temporal delay to the label identification system again during the other half-wave of the alternating field, and
- each bit (i) of the identification information is coded in such a way that it corresponds to an integral multiple (2i) of a known base energy amount dependent on the position and the distance of the identification label (2) from the transmitting-receiving unit (1).

13. Coding method according to Claim 12, **characterized in that**, in the case of a sinusoidal alternating magnetic field (3), the base energy amount is calibrated in the transmitting-receiving unit (1) by a likewise position-dependent reference signal which is emitted from the identification label (2) during a half-wave and is quantified by the amount of energy corresponding to the identification information and buffer-stored in the identification label (2) during the neighbouring half-wave.

## Revendications

1. Etiquette d'identification pour des systèmes d'identification par étiquettes, l'étiquette d'identification comprenant :
- une bobine (L2) secondaire, qui peut être mise dans un champ (3) alternatif magnétique périodique émis par une unité (1) d'émetteur/récepteur du système d'identification d'étiquettes et peut ainsi être couplé inductivement avec lui,
- une unité (4) électrique de mémorisation pour la mémorisation bit par bit de l'information d'identification sous forme de code binaire et
- un moyen de circuit, qui relie la bobine (L2) secondaire à l'unité (4) de mémorisation, **caractérisée en ce que** dans l'unité (4) de mémorisation l'énergie prélevée de la bobine (L1) secondaire n'est stockée intermédiairement que pendant une demi-onde du champ (3) alternatif et l'énergie correspondant à l'information de l'identification qui y est mémorisée peut être retransmise au système d'identification par étiquettes par le moyen de circuit et la bobine (L2) secondaire pendant l'autre demi-onde du champ alternatif,
dans laquelle
- chaque bit (i) de l'information d'identification est codé de manière à correspondre à un multiple (2ⁱ) entier d'une quantité d'énergie de base connue qui dépend de la position et de la distance de l'étiquette (2) d'identification à l'unité (1) d'émetteur/récepteur.

2. Etiquette d'identification suivant la revendication 1,
**caractérisée en ce que**
l'unité (4) de mémorisation a n transistors (14₀ à 14ₙ₋₁) de mémoire qui sont montés en parallèle par leurs bornes de source et/ou de drain et qui correspondent respectivement à un bit (i) du énième mot (5) binaire d'information d'identification en la position n.

3. Etiquette d'identification suivant la revendication 2,
**caractérisée en ce que**
l'unité (4) de mémorisation a, pour mémoriser un signal de référence, un transistor (15) de mémoire supplémentaire monté en parallèle aux autres transistors de mémoire.

4. Etiquette d'identification suivant l'une des revendications 1 à 3,
**caractérisée en ce que**
la position du bit (i) respectif du mot d'information d'identification est fixée par la largeur correspondante de chaque transistor (14₀ à 14ₙ₋₁) de mémoire.

5. Etiquette d'identification suivant l'une des revendications 1 à 4,
**caractérisée en ce que**
l'état logique ("0" ou "1") de chaque bit d'un mot d'information d'identification est fixé par la mise en contact de la borne de source et/ou de drain du transistor (14₀ à 14ₙ₋₁) de mémoire respectif.

6. Etiquette d'identification suivant la revendication 2 ou 3,
**caractérisée en ce que**
les transistors de l'étiquette (2) d'identification sont des transistors polymères.

7. Etiquette d'identification suivant la revendication 6,
**caractérisée en ce que**
les pistes conductrices déterminant la mise en contact de chaque transistor de mémoire sont produites par impression offset.

8. Système d'identification d'étiquettes pour l'étiquette d'identification suivant l'une des revendications 1 à 7, comprenant :
- une bobine (L1) primaire dans l'unité (1) d'émetteur/récepteur, bobine qui émet le champ alternatif magnétique périodique,
- un moyen (6) de détection relié à la bobine (L1) primaire dans l'unité (1) d'émetteur/récepteur pour la détection de l'énergie retransmise pendant l'autre demi-onde du champ (3) alternatif magnétique et modulée par l'information d'identification et un moyen (7) de décodage de celle-ci, dans lequel
- l'information d'identification modulée par transformation d'énergie magnétique en énergie électrostatique et à un instant ultérieur modulée en retour en énergie magnétique, peut être décodée en raison de la modification détectée du contenu en énergie du champ (3) alternatif magnétique par constatation par les moyens (6) de détection du courant nécessaire pour une tension d'émission constante pour en déterminer par les moyens (7) de décodage l'information d'identification sous la forme de code binaire et
- chaque bit (i) de l'information d'identification est codé de manière à correspondre à un multiple (2ⁱ) entier d'une quantité d'énergie de base connue qui dépend de la position et de la distance de l'étiquette (2) d'identification à l'unité (1) d'émetteur/récepteur.

9. Système d'identification d'étiquettes suivant la revendication 8,
**caractérisé en ce que**
le multiple est respectivement 2ⁱ fois la quantité d'énergie de base.

10. Système d'identification d'étiquettes suivant la revendication 8 ou 9,
**caractérisé en ce que**
la quantité d'énergie de base peut être étalonnée dans l'unité (1) d'émetteur/récepteur par un signal de référence qui dépend également de la position, qui est émis par l'étiquette (2) d'identification et qui quantifie la quantité de l'énergie de l'étiquette (2) stockée intermédiairement en fonction de l'information d'identification.

11. Système d'identification d'étiquettes suivant l'une des revendications 8 à 10,
**caractérisé en ce que**
le champ (3) alternatif magnétique émis par l'unité (1) d'émetteur/récepteur est sinusoïdal et **en ce que** le contenu de la mémoire indiquant le mot d'information d'identification de l'étiquette (2) d'identification peut être modulé sur l'une des demi-ondes et le signal de référence sur l'autre demi-onde voisine de l'oscillation sinusoïdale.

12. Procédé de codage pour un système d'identification par étiquettes par couplage inductif d'un champ (3) alternatif magnétique périodique émis par une bobine (L1) primaire d'une unité (1) d'émetteur/récepteur à une bobine (L2) secondaire reliée à une étiquette (2) d'identification sous la forme d'une information d'identification à transmettre en tant que mot binaire par l'étiquette d'identification, dans lequel
- on mémorise intermédiairement l'information (5) d'identification de l'étiquette d'information sous la forme d'un mot binaire seulement pendant une demi-onde du champ (3) alternatif et on retransmet au système d'identification par étiquettes, pendant l'autre demi-onde du champ alternatif, l'énergie correspondant à l'information d'identification qui y est mémorisée et
- chaque bit (i) de l'information d'identification est codé de manière à correspondre à un multiple (2ⁱ) entier d'une quantité d'énergie de base connue qui dépend de la position et de la distance de l'étiquette (2) d'identification à l'unité (1) d'émetteur/récepteur.

13. Procédé de codage suivant la revendication 12,
**caractérisé en ce que**
dans le cas d'un champ (3) alternatif magnétique sinusoïdal, la quantité d'énergie de base est étalonnée dans l'unité (1) d'émetteur/récepteur par un signal de référence émis également en fonction de la position de l'étiquette (2) d'identification pendant une demi-onde, signal qui est quantifié par la quantité d'énergie correspondant à l'information d'identification et stocké intermédiairement dans l'étiquette (2) d'information pendant la demi-onde voisine.
